# EUROPEAN PATENT SPECIFICATION

(11) **EP 2 524 354 B1**
(45) Date of publication and mention of the grant of the patent: **16.11.2016**
(21) Application number: 10803576.7
(22) Date of filing: 29.12.2010
(51) Int. Cl.: G06F 21/35, G06K 19/077, G07C 9/00

(54) **System, Smartcard and method for access authorization**
System, Chipkarte und Verfahren für Zugriffsautorisierung
Système, carte intelligente et procédé d'autorisation d'accès

(30) Priority: 11.01.2010 US 293929 P; 11.01.2010 EP 10000157
(43) Date of publication of application: 21.11.2012
(73) Proprietor: Telekom Deutschland GmbH, 53227 Bonn (DE)
(72) Inventor: BEST, Manfred, 53567 Buchholz (DE)
(74) Representative: Schwöbel, Thilo K.
(86) International application number: PCT/EP2010/007959
(87) International publication number: WO 2011/082819

(56) References cited:
- EP-A1- 0 426 163
- EP-A2- 1 139 200
- GB-A- 2 437 557
- US-A1- 2004 050 930
- US-A1- 2005 240 528
- US-B1- 7 039 221

## Description

### BACKGROUND

The present invention relates to a system, a smartcard, a method, a program and a computer program product for access authorization, especially for a fast and comfortable access with a high security level, for example at an entrance of a company building or other access restricted locations.

A chip card with a display is known from the patent application DE 10147140 A1, which discloses a chip card processor and a display controller of a display chip card are embodied in a single chip. Said chip is disposed on the same substrate on which the display is also arranged. As a result, there is no need for connection lines and contacts between the display controller and the processor chip. The display and the chip form a mechanical unit and the processor chip no longer needs to be inserted separately. Preferably, the display substrate extends, in conjunction with the processor chip or at least strip conductors leading to the processor chip, underneath the contact field of the chip card.

The drawback of the chip card with the display mentioned above is that there is no transceiver unit for establishing a wireless connection for exchanging information pertaining to an authorized user. A further drawback of the chip card is that there is no memory unit for storing information.

US2004/050930A1 discloses a smart card with a sensor and a display.

### SUMMARY

An object of the present invention is to provide a system, a smartcard, a method, a program and a computer program product for access authorization, especially for a fast and comfortable access with a high security level, for example at an entrance of a company building or other access restricted locations. The method providing a higher security level than conventional systems because information pertaining to a user is not stored on the smartcard, wherein the use of the system is more comfortable for the user and/or an entry to the access restricted location works faster.

### CONFIRMATION COPY

The object of the present invention is achieved by the system for access authorization, wherein the system comprises the smartcard and an authorization client, wherein the smartcard comprises a substrate adapted to mechanically hold all units integrated in the smartcard, wherein the smartcard further comprises a transceiver unit adapted to transmit signals to the authorization client and to receive signals from the authorization client, a memory unit adapted to store first identification data, a display unit adapted to display an information related to second identification data received from the authorization client in case that the smartcard or the user of the smartcard is authorized, a battery unit adapted to store electric power for all the units integrated in the smartcard, wherein the first identification data that are stored in the memory unit of the smartcard are only indicative of the identity of the user of the smartcard, wherein a complementary information with regard to the first identification data is required to determine the identity of the user of the smartcard, wherein upon the reception of information related to the first identification data, the complementary information is accessed by the authorization client and the second identification data sent to the smartcard, wherein the authorization client comprises a transceiver module adapted for communication with the smartcard by a connection in case that the smartcard is located in an authorization area, wherein the authorization client comprises a first module coupled to the transceiver module adapted for granting the access authorization for the smartcard and its user.

According to the present invention, it is thereby advantageously possible that the first identification data, which is stored on the memory unit of the smartcard, is just a number which is divulging no individual-related information of the user of the smartcard or information of a company or the like. The second identification data is sent to the smartcard only, if the smartcard or the user of the smartcard is authorized, wherein the information related to the second identification data is displayed on the display unit of the smartcard only, if the user of the smartcard is recognized as an authorized user.

According to the present invention, it is thereby advantageously possible that the smartcard does not show any information according to the user and/or to the issuer of the smartcard (the issuer of the smartcard is typically the company or employer of the user of the smartcard). Thereby, it is usually not possible for a non-authorized person (that e.g. finds the smartcard that has been lost by the authorized user) to even know the building or the kind of building that could be accessed by the smartcard. A further advantage is that the information according to the user or the company is not even stored on the memory unit of the smartcard in such a manner that the identity of the user and/or of the issuer of the smartcard can be determined without an additional (complementary) information. According to the present invention, this complementary information is only accessible by the authorization client, i.e. this complementary information is either stored in the authorization client (e.g. in a database within the authorization client or in a database assigned or related to the authorization client) or can be accessed by or via the authorization client. In any case, the complementary information (and hence the determination of the (non-encrypted) identity of the user and/or of the issuer of the smartcard) is not accessible based solely on the pieces of information stored in the memory unit of the smartcard. In the context of the present invention, the "(non-encrypted) identity of the user and/or of the issuer of the smartcard" relates to an information such as a (non-encrypted) name (of the user and/or the issuer of the smartcard) or a (non-encrypted) telephone number or a (non-encrypted) e-mail-address or another piece of information allowing to draw (without further non-generally accessible information) a conclusion on the (non-encrypted) identity of the user and/or the issuer of the smartcard.

The substrate of the smartcard is only indicative of the identity of the user and/or of the issuer of the smartcard, wherein the identity of the user and/or of the issuer of the smartcard is visible only after the information related to the second identification data being displayed on the display unit of the smartcard.

Thereby, it is possible that it is usually not possible for a non-authorized person to even know the building or the kind of building that could be accessed by the smartcard.

According to a preferred embodiment of the present invention, a corridor protected against radio signals adapted for separating different smartcards and their users from each other is assigned to the authorization client. An advantage thereof is that the signals of smartcards outside the corridor cannot disturb or overlay (or interfere with) the signal of the smartcard inside the corridor.

According to another preferred embodiment of the present invention, the connection between the authorization client and the smartcard is a wireless connection, the wireless connection being preferably a Bluetooth connection or a W-LAN connection. An advantage thereof is that the connection is capable of passing e. g. cloths, briefcases and vehicle body structures. In particular, an optional line of sight is not necessary.

According to another preferred embodiment of the present invention, the corridor is configured such that only one user is able to use the corridor at the same time, wherein the transceiver module is located at an end of the corridor and wherein a radio coverage range of the transceiver module is small compared to a normal Bluetooth or W-LAN connection, preferably about 1 meter. An advantage thereof is that it is possible to identify a position of one smartcard and its user exactly, preferably to open a gate automatically for the authorized user only. Exactly means that the smartcard and its user are located in the radio coverage range of the transceiver module, which is located in the corridor.

According to another preferred embodiment of the present invention, the authorization area corresponds to the radio coverage range of the transceiver module. An advantage thereof is that the authorization area is inside the corridor and it is such small, that just one user can be into the authorization area at the same time. Therefore the location of the authorized user of the smartcard can be detected very accurate, wherein accurate means that the authorized user is located into the authorization area only.

According to another preferred embodiment of the present invention, the smartcard comprises an input unit adapted to recognize the user of the smartcard, wherein the input unit comprises at least one out of a touch-screen configurable for recognize an ID-code, a camera configurable for recognize the user of the smartcard by a facial recognition and a fingerprint scanner configurable for recognize the user of the smartcard by a fingerprint. An advantage thereof is that either one of said components can be used for the recognition of the user of the smartcard, or two of said components or all of said components can be used for the recognition of the user of the smartcard. According to the said configurations of the input unit, the safety level of the access authorization system differs.

The object of the present invention is achieved by the Smartcard for access authorization, wherein the smartcard comprises a substrate, a transceiver unit, a memory unit, a display unit and a battery unit, the substrate adapted to mechanically hold all the units integrated in the smartcard, the transceiver unit being adapted to transmit the signals to an authorization client and to receive the signals from the authorization client, the memory unit being adapted to store the first identification data, the display unit being adapted to display the information related to the second identification data received from the authorization client in case that the smartcard or the user of the smartcard is authorized, the battery unit being adapted to store the electric power for all the integrated units of the smartcard, wherein the first identification data that are stored in the memory unit of the smartcard are only indicative of the identity of the user of the smartcard, wherein a complementary information with regard to the first identification data is required to determine the identity of the user of the smartcard, wherein upon the reception of information related to the first identification data, the complementary information is accessed by the authorization client and the second identification data sent to the smartcard.

According to the present invention, it is thereby advantageously possible that the smartcard does not show any information according to the user or the company, if somebody who is not authorized wants to use the smartcard to enter a building for instance. A further advantage is that the information according to the user or the company is not even stored on the memory unit of the smartcard.

According to a preferred embodiment of the present invention, the smartcard comprises the input unit adapted to recognize the user of the smartcard, preferably by the fingerprint, by the facial recognition or by the access ID-code. An advantage thereof is that the user of the smartcard can be identified exactly before displaying the information relating to the second identification data. Therefore it is not possible for an unauthorized user to operate the smartcard, wherein the different security levels are possible according to the different alternatives of recognizing the user like the fingerprint, the facial recognition or the access ID-code.

According to another preferred embodiment of the present invention, the input unit comprises at least one out of a touch-screen configurable for recognize the ID-code, a camera configurable for recognize the user of the smartcard by the facial recognition and a fingerprint scanner configurable for recognize the user of the smartcard by the fingerprint. An advantage thereof is that the display unit of the smartcard can be used for input the ID-code for recognizing the user of the smartcard, wherein an input field and a keypad is shown on the touch-screen, wherein the ID-code is entered by touching the keypad.

According to another preferred embodiment of the present invention, the transceiver unit is configurable as a Bluetooth unit or a W-LAN unit. An advantage thereof is that the connection between the smartcard and the authorization client can be established through the cloth, the briefcases and the vehicle body structures. In particular, the optional line of sight between the transceiver unit and the transceiver module is not necessary.

The object of the present invention is furthermore achieved by the method for access authorization using the smartcard and the authorization client, wherein the smartcard comprises the substrate adapted to mechanically hold all the units integrated in the smartcard, wherein the smartcard further comprises the transceiver unit adapted to transmit the signals to the authorization client and to receive the signals from the authorization client, the memory unit adapted to store the first identification data, the display unit adapted to display the information related to the second identification data received from the authorization client in case that the smartcard or the user of the smartcard is authorized, the battery unit adapted to store the electric power for all the integrated units of the smartcard, wherein the authorization client comprises the transceiver module adapted for the communication with the smartcard by the connection in case that the smartcard is located in the authorization area, wherein in a first step of the method the smartcard and its user enters the authorization area the connection is established, wherein in a second step of the method the smartcard sends the first identification data to the authorization client via the connection automatically, wherein in a third step of the method the authorization client checks the authorization of the smartcard and its user and grants the access for the smartcard and its user dependent on the first identification data, wherein in a fourth step of the method the authorization client sends the second identification data to the smartcard in case that the access is granted, by using the connection, wherein the display unit of the smartcard displays the information related to the second identification data, wherein the first identification data that are stored in the memory unit of the smartcard are only indicative of the identity of the user of the smartcard, wherein a complementary information with regard to the first identification data is required to determine the identity of the user of the smartcard, wherein upon the reception of information related to the first identification data, the complementary information is accessed by the authorization client and the second identification data sent to the smartcard.

According to the present invention, it is thereby advantageously possible that the authorization client grants the access authorization to the smartcard, wherein the authorization client can provide further security options for the user of the smartcard. The security options are the recognition of the authorized user by the fingerprint, by the facial recognition or by the ID-code, therefore the authorization client provides the security options, the safety standard can be adhere for each situation.

According to another preferred embodiment of the present invention, the authorization client comprises a first module coupled to the transceiver module adapted for granting the access authorization for the smartcard and its user, particularly the first module checks the authorization of the smartcard and its user by comparing the received first identification data with stored third identification data and grants access for the smartcard and its user in case that the first identification data matches the stored third identification data. An advantage thereof is that the first identification data is the number only, wherein the first identification data from the smartcard and the stored third identification data have to be exactly the same for granting the access for the smartcard.

According to another preferred embodiment of the present invention, the first identification data is configurable as the number identifying the smartcard, wherein the second identification data is configurable as the individual-related information of the user of the smartcard particularly a name, a personnel number and a photograph. An advantage thereof is that the individual-related information of the user of the smartcard is not stored on the smartcard, but sent from the authorization client to the smartcard in case that the smartcard is authorized. Therefore there are no information relating to the user or the company stored on the smartcard, wherein someone who find the smartcard can not find out something about the user or the company.

According to another preferred embodiment of the present invention, in the fourth step the security options can require to display the information related to the second identification data (42), wherein the security options are configurable as the recognition of the user of the smartcard (2) by the fingerprint, by the facial recognition or by the ID-code. An advantage thereof is that someone who is not authorized to use the authorized smartcard can be recognized if the not authorized user has to put in the fingerprint or the ID-code or the not authorized user is recognized by the facial recognition.

The present invention also relates to a computer readable program code for controlling the access authorization according to the inventive method for access authorization and furthermore, the present invention relates to a computer program product comprising the computer readable program code according to the inventive method. An advantage thereof is that the program can be installed not only on the smartcard but also on a notebook, a personal digital assistant, a car computer, a mobile terminal, or the like. A further advantage is that a product can be developed especially for that program.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 shows schematically a configuration of a smartcard for access authorization according to the present invention.
Figure 2 shows schematically a configuration of a system for access authorization with an authorization client and the smartcard.
Figure 3 shows schematically an exchange of information between the authorization client and the smartcard.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

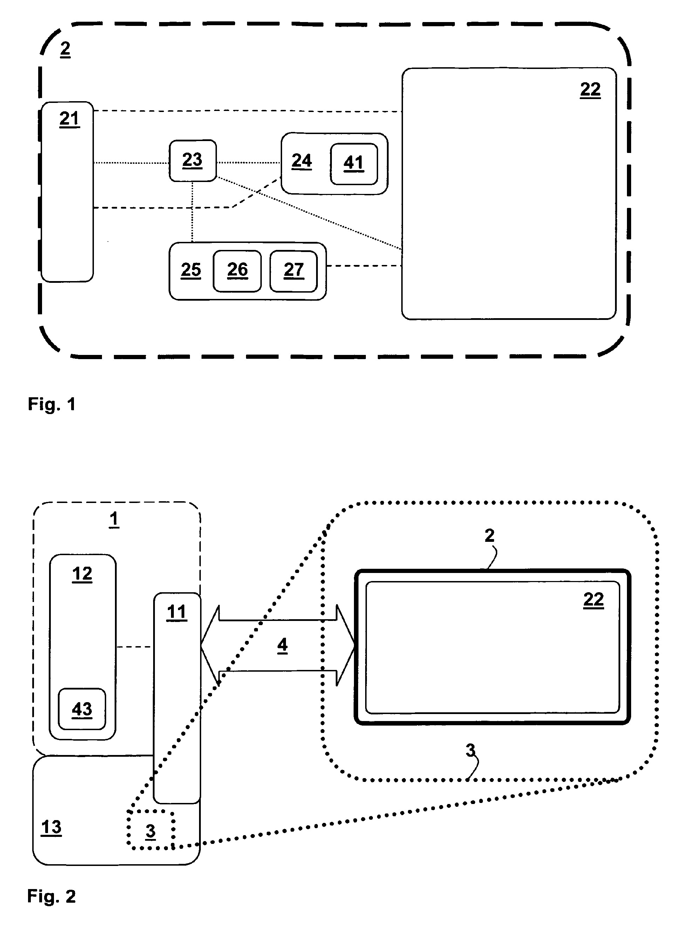

Figure 1 shows schematically a configuration of a smartcard 2 for access authorization according to the present invention. The smartcard 2 comprises a transceiver unit 21, a display unit 22, a battery unit 23, a memory unit 24 and an input unit 25, wherein all these units are mechanically held by a substrate. The transceiver unit 21 is adapted to establish a connection 4 between the smartcard 2 and an authorization client 1, wherein the transceiver unit 21 is configurable to receive and transmit signals. The transceiver unit 21 is e. g., a Bluetooth unit or a W-LAN unit, wherein the connection 4 is e. g. a Bluetooth connection or a W-LAN connection or other short range radio connection. The display unit 22 is adapted to display an information related to second identification data 42 received from the authorization client 1, wherein the information related to the second identification data 42 is configurable as individual-related information of a user of the smartcard 2 particularly a name, a personnel number and/or a photograph. The display unit 22 preferably corresponds to a substantial part of a surface of the smartcard 2, e. g. 70 % or 80 % of that surface, and the display unit 22 being very thin, e. g. having a thickness of less than 5 mm, preferably less then 2 mm, more preferably less then 1 mm, most preferably less than 0,5 mm and being located at one side of the smartcard 2, wherein the side of the smartcard 2 with the display unit 22 is hereinafter also named front side. The other side of the smartcard 2 (which is located adverse the front side), is named back side. The battery unit 23 is adapted to store electric power for all the units integrated in the smartcard 2, wherein the battery unit 23 is coupled to all the units integrated in the smartcard 2. The battery unit 23 is preferably provided rechargeable. The memory unit 24 is adapted to store first identification data 41, wherein the memory unit 24 is coupled to the transceiver unit 21, wherein the first identification data 41 is configurable as a number identifying the smartcard. The input unit 25 of the smartcard 2 comprises at least one out of a touch-screen configurable for recognize an ID-code, a camera 27 configurable for recognize the user of the smartcard 2 by a facial recognition and a fingerprint scanner 26 configurable for recognize the user of the smartcard 2 by a fingerprint. The input unit 25 can comprise one of the said options, two or all three options for the recognition of the user of the smartcard 2 and the input unit 25 can be located either on the front side of the smartcard 2 or on the back side of the smartcard 2. In case the input unit 25 is a fingerprint scanner 26, it is located on the backside of the smartcard 2, in case the input unit 25 is a camera 27, it is located on the backside of the smartcard 2, in case the input unit 25 is a touch screen, it is located at the front side of the smartcard 2, wherein the touch-screen can be integrated in the display unit 22.

Figure 2 shows schematically a configuration of a system for access authorization with the authorization client 1 and the smartcard 2 according to the present invention. The authorization client 1 comprises a transceiver module 11 and a first module 12. Further, a corridor 13 is assigned to the authorization client 1. The transceiver module 11 is adapted for a communication with the smartcard 2 by the connection 4 in case that the smartcard 2 is located in an authorization area 3 inside the corridor 13. The transceiver module 11 is configurable preferably as a Bluetooth module or a W-LAN module. The transceiver module 11 is located, e. g., at an end of the corridor 13. The radio coverage range of the transceiver module 11 is small compared to a normal radio coverage range of Bluetooth or W-LAN, preferably the radio coverage range of the transceiver module 11 is about 5 m, more preferably about 1 meter. Hereinafter, the radio coverage range of the transceiver module 11 is also called the authorization area 3, which is a part of the corridor 13. The size of the authorization area 3 corresponds to, e. g., about 2 m², more preferably about 1 m², most preferably about ½ m². The first module 12 is coupled to the transceiver module 11 and is adapted for granting the access authorization, e. g. by means of opening a door or a gate or other access restrictions, for the smartcard 2 and its user dependent on the first identification data 41. The access authorization is granted by the first module 12 if the first identification data 41 matches stored third identification data 43, wherein such a matching means that the first identification data 41 and the third identification data 43 are the same. Preferably the corridor 13 is protected against radio signals, such that the use of the corridor 13 enables the separation of different smartcards 2 and its users from each other. E. g. the corridor 13 is configured such that about three users are able to use the corridor 13 at the same time.

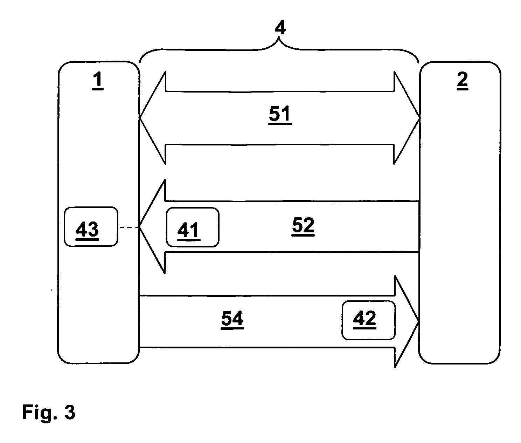

Figure 3 shows schematically an exchange of information between the authorization client 1 and the smartcard 2 using the connection 4. In a first step 51 of the method, the user of the smartcard 2 enters the authorization area 3 with the smartcard 2. After the smartcard 2 gets into the authorization area 3, the connection 4 is established within the first step 51. In a second step 52 of the method, the smartcard 2 sends the first identification data 41 to the authorization client 1 automatically via the connection 4. In a third step of the method, the authorization client 1 checks the access authorization of the smartcard 2 and its user. The authorization client 1 grants the access to the smartcard 2 and its user if the first identification data 41 matches the third identification data 43. Subsequently the authorization client 1 sends in a fourth step 54 the second identification data 42 to the smartcard 2 via the connection 4 in case that the access is granted to the smartcard 2. The display unit 22 of the smartcard 2 displays the information related to the received second identification data 42 if the authorization client 1 has not arranged further security options for displaying the information related to the received second identification data 42. The further security options can be the recognition of the user of the smartcard 2 by the fingerprint, by the facial recognition and/or by inputting the ID-code. The further security options provide an enhanced level of security to the access authorization system, wherein an unauthorized user can be distinguished from an authorized user.

## Claims

1. System for access authorization, wherein the system comprises a smartcard (2) and an authorization client (1),
-- wherein the smartcard (2) comprises a substrate adapted to mechanically hold all units integrated in the smartcard (2), wherein the smartcard (2) further comprises a transceiver unit (21) adapted to transmit signals to the authorization client (1) and to receive signals from the authorization client (1), a memory unit (24) adapted to store first identification data (41), a display unit (22) adapted to display an information related to second identification data (42) received from the authorization client (1) in case that the smartcard (2) or a user of the smartcard (2) is authorized, and a battery unit (23) adapted to store electric power for all the units integrated in the smartcard (2), wherein the first identification data (41) that are stored in the memory unit (24) of the smartcard (2) are only indicative of the identity of the user of the smartcard (2), wherein a complementary information with regard to the first identification data (41) is required to determine the identity of the user of the smartcard (2), wherein upon the reception of information related to the first identification data (41), the complementary information is accessed by the authorization client (1) and the second identification data sent to the smartcard (2),
-- wherein the authorization client (1) comprises a transceiver module (11) adapted for communication with the smartcard (2) by a connection (4) in case that the smartcard (2) is located in an authorization area (3), wherein the authorization client (1) comprises a first module (12) coupled to the transceiver module (11) adapted for granting the access authorization for the smartcard (2) and its user, and
-- wherein the substrate of the smartcard (2) is adapted to be only indicative of the identity of the user and/or of the issuer of the smartcard (2), wherein the smartcard is adapted such that the identity of the user and/or of the issuer of the smartcard (2) is visible only after the information related to the second identification data (42) being displayed on the display unit (22) of the smartcard (2).

2. System according to any of the preceding claims, wherein a corridor (13) protected against radio signals adapted for separating different smartcards (2) and their users from each other is assigned to the authorization client (1).

3. System according to any of the preceding claims, wherein the connection (4) between the authorization client (1) and the smartcard (2) is a wireless connection, the wireless connection being preferably a Bluetooth connection or a W-LAN connection.

4. System according to any of the preceding claims, wherein the corridor (13) is configured such that only one user is able to use the corridor (13) at the same time, wherein the transceiver module (11) is located at an end of the corridor (13) and wherein a radio coverage range of the transceiver module (11) is small compared to a normal Bluetooth or W-LAN connection, preferably about 1 meter.

5. System according to any of the preceding claims, wherein the authorization area (3) corresponds to the radio coverage range of the transceiver module (11).

6. System according to any of the preceding claims, wherein the smartcard (2) comprises an input unit (25) adapted to recognize the user of the smartcard (2), wherein the input unit (25) comprises at least one out of a touch-screen configurable for recognize an ID-code, a camera (27) configurable for recognize the user of the smartcard (2) by a facial recognition and a fingerprint scanner (26) configurable for recognize the user of the smartcard (2) by a fingerprint.

7. Smartcard (2) for access authorization, wherein the smartcard (2) comprises
-- a substrate adapted to mechanically hold all units integrated in the smartcard (2),
-- a transceiver unit (21) adapted to transmit signals to an authorization client (1) and to receive signals from the authorization client (1),
-- a memory unit (24) adapted to store first identification data (41),
-- a display unit (22) adapted to display an information related to second identification data (42) received from the authorization client (1) in case that the smartcard (2) or a user of the smartcard (2) is authorized, wherein the first identification data (41) that are stored in the memory unit (24) of the smartcard (2) are only indicative of the identity of the user of the smartcard (2), wherein a complementary information with regard to the first identification data (41) is required to determine the identity of the user of the smartcard (2), wherein upon the reception of information related to the first identification data (41), the complementary information is accessed by the authorization client (1) and the second identification data sent to the smartcard (2),
-- a battery unit (23) adapted to store electric power for all the integrated units of the smartcard (2),
wherein the substrate of the smartcard (2) is adapted to be only indicative of the identity of the user and/or of the issuer of the smartcard (2), wherein the smartcard is adapted such that the identity of the user and/or of the issuer of the smartcard (2) is visible only after the information related to the second identification data (42) being displayed on the display unit (22) of the smartcard (2).

8. Smartcard (2) according to claim 7, wherein the smartcard (2) comprises an input unit (25) adapted to recognize the user of the smartcard (2), preferably by a fingerprint, by a facial recognition or by an access ID-code.

9. Smartcard (2) according to one of the claims 7 or 8, wherein the input unit (25) comprises at least one out of a touch-screen configurable for recognize the ID-code, a camera (27) configurable for recognize the user of the smartcard (2) by the facial recognition and a fingerprint scanner (26) configurable for recognize the user of the smartcard (2) by the fingerprint.

10. Smartcard (2) according to one of the claims 7 to 9, wherein the transceiver unit (21) is configurable as a Bluetooth unit or a W-LAN unit.

11. method for access authorization using a smartcard (2) and an authorization client (1),
-- wherein the smartcard (2) comprises a substrate adapted to mechanically hold all units integrated in the smartcard (2), wherein the smartcard (2) further comprises a transceiver unit (21) adapted to transmit signals to the authorization client (1) and to receive signals from the authorization client (1), wherein the smartcard (2) further comprises a memory unit (24) adapted to store first identification data (41), wherein the smartcard (2) further comprises a display unit (22) adapted to display an information related to second identification data (42) received from the authorization client (1) in case that the smartcard (2) or a user of the smartcard (2) is authorized, wherein the smartcard (2) further comprises a battery unit (23) adapted to store electric power for all the integrated units of the smartcard (2),
-- wherein the authorization client (1) comprises a transceiver module (11) adapted for communication with the smartcard (2) by a connection (4) in case that the smartcard (2) is located in an authorization area (3),
-- wherein in a first step (51) of the method, the smartcard (2) and its user enters the authorization area (3) and the connection (4) is established,
-- wherein in a second step (52) of the method, the smartcard (2) sends the first identification data (41) to the authorization client (1) via the connection (4) automatically,
-- wherein in a third step of the method the authorization client (1) checks the authorization of the smartcard (2) and its user and grants access for the smartcard (2) and its user dependent on the first identification data (41),
-- wherein in a fourth step (54) of the method the authorization client (1) sends the second identification data (42) to the smartcard (2) in case that the access is granted, by using the connection (4), wherein the display unit (22) of the smartcard (2) displays the information related to the second identification data (42),
wherein the first identification data (41) that are stored in the memory unit (24) of the smartcard (2) are only indicative of the identity of the user of the smartcard (2), wherein a complementary information with regard to the first identification data (41) is required to determine the identity of the user of the smartcard (2), wherein upon the reception of information related to the first identification data (41), the complementary information is accessed by the authorization client (1) and the second identification data sent to the smartcard (2),
wherein the substrate of the smartcard (2) is adapted to be only indicative of the identity of the user and/or of the issuer of the smartcard (2), wherein the smartcard is adapted such that the identity of the user and/or of the issuer of the smartcard (2) is visible only after the information related to the second identification data (42) being displayed on the display unit (22) of the smartcard (2).

12. Method according to claim 11, wherein the first identification data (41) is configurable as a number identifying the smartcard (2), wherein the second identification data (42) is configurable as individual-related information of the user of the smartcard (2) particularly a name, a personnel number and a photograph.

13. Method according to one of the claims 11 or 12, wherein in the fourth step (54) security options can require to display the information related to the second identification data (42), wherein the security options are configurable as a recognition of the user of the smartcard (2) by a fingerprint, by a facial recognition or by an ID-code.

14. Computer program product for controlling an access authorization according to a method for access authorization according to one of the claims 11 to 13.

## Patentansprüche

1. System für eine Zugangsautorisierung, wobei das System eine Smartcard (2) und einen Autorisierungs-Client (1) umfasst,
- wobei die Smartcard (2) ein Substrat umfasst, das dafür eingerichtet ist, alle in der Smartcard (2) integrierten Einheiten mechanisch zu halten, wobei die Smartcard (2) des Weiteren eine Transceiver-Einheit (21) umfasst, die dafür eingerichtet ist, Signale an den Autorisierungs-Client (1) zu senden und Signale von dem Autorisierungs-Client (1) zu empfangen, eine Speichereinheit (24), die dafür eingerichtet ist, erste Identifikationsdaten (41) zu speichern, eine Anzeigeeinheit (22), die dafür eingerichtet ist, eine Information in Bezug auf von dem Autorisierungs-Client (1) empfangene zweite Identifikationsdaten (42) anzuzeigen, falls die Smartcard (2) oder ein Nutzer der Smartcard (2) autorisiert ist, und eine Batterieeinheit (23), die dafür eingerichtet ist, elektrische Leistung für alle in der Smartcard (2) integrierten Einheiten zu speichern, wobei die ersten Identifikationsdaten (41), die in der Speichereinheit (24) der Smartcard (2) gespeichert sind, lediglich die Identität des Nutzers der Smartcard (2) angeben, wobei komplementäre Informationen mit Bezug auf die ersten Identifikationsdaten (41) erforderlich sind, um die Identität des Nutzers der Smartcard (2) zu bestimmen, wobei beim Empfang von Informationen in Bezug auf die ersten Identifikationsdaten (41) durch den Autorisierungs-Client (1) auf die komplementären Informationen zugegriffen wird und die zweiten Identifikationsdaten an die Smartcard (2) gesendet werden,
- wobei der Autorisierungs-Client (1) ein Transceiver-Modul (11) umfasst, das für eine Kommunikation mit der Smartcard (2) über eine Verbindung (4) eingerichtet ist, falls die Smartcard (2) sich in einem Autorisierungsbereich (3) befindet, wobei der Autorisierungs-Client (1) ein erstes Modul (12) umfasst, das mit dem Transceiver-Modul (11) gekoppelt ist und dafür eingerichtet ist, die Zugangsautorisierung für die Smartcard (2) und ihren Nutzer zu gewähren, und
- wobei das Substrat der Smartcard (2) nur die Identität des Nutzers und/oder des Ausstellers der Smartcard (2) angibt, wobei die Identität des Nutzers und/oder des Ausstellers der Smartcard (2) erst dann sichtbar ist, nachdem die Informationen in Bezug auf die zweiten Identifikationsdaten (42) auf der Anzeigeeinheit (22) der Smartcard (2) angezeigt wurden.

2. System nach einem der vorangehenden Ansprüche, wobei ein Korridor (13), der vor Funksignalen geschützt und dafür eingerichtet ist, verschiedene Smartcards (2) und ihre Nutzer voneinander zu trennen, dem Autorisierungs-Client (1) zugewiesen ist.

3. System nach einem der vorangehenden Ansprüche, wobei die Verbindung (4) zwischen dem Autorisierungs-Client (1) und der Smartcard (2) eine drahtlose Verbindung ist, wobei die drahtlose Verbindung bevorzugt eine Bluetooth-Verbindung oder eine W-LAN-Verbindung ist.

4. System nach einem der vorangehenden Ansprüche, wobei der Korridor (13) so ausgebildet ist, dass nur ein einziger Nutzer in der Lage ist, den Korridor (13) gleichzeitig zu verwenden, wobei sich das Transceiver-Modul (11) an einem Ende des Korridors (13) befindet, und wobei ein Funkversorgungsbereich des Transceiver-Moduls (11) im Vergleich zu einer normalen Bluetooth- oder W-LAN-Verbindung klein ist, bevorzugt ungefähr 1 Meter.

5. System nach einem der vorangehenden Ansprüche, wobei der Autorisierungsbereich (3) dem Funkversorgungsbereich des Transceiver-Moduls (11) entspricht.

6. System nach einem der vorangehenden Ansprüche, wobei die Smartcard (2) eine Eingabeeinheit (25) umfasst, die dafür eingerichtet ist, den Nutzer der Smartcard (2) zu erkennen, wobei die Eingabeeinheit (25) mindestens eines von Folgendem umfasst: einen Berührungsbildschirm, der dafür ausgebildet werden kann, einen ID-Code zu erkennen, eine Kamera (27), die dafür ausgebildet werden kann, den Nutzer der Smartcard (2) durch eine Gesichtserkennung zu erkennen, und einen Fingerabdruckscanner (26), der dafür ausgebildet werden kann, den Nutzer der Smartcard (2) anhand eines Fingerabdrucks zu erkennen.

7. Smartcard (2) für eine Zugangsautorisierung, wobei die Smartcard (2) Folgendes umfasst:
- ein Substrat, das dafür eingerichtet ist, alle in der Smartcard (2) integrierten Einheiten mechanisch zu halten,
- eine Transceiver-Einheit (21), die dafür eingerichtet ist, Signale an einen Autorisierungs-Client (1) zu senden und Signale von dem Autorisierungs-Client (1) zu empfangen,
- eine Speichereinheit (24), die dafür eingerichtet ist, erste Identifikationsdaten (41) zu speichern,
- eine Anzeigeeinheit (22), die dafür eingerichtet ist, eine Information in Bezug auf von dem Autorisierungs-Client (1) empfangene zweite Identifikationsdaten (42) anzuzeigen, falls die Smartcard (2) oder ein Nutzer der Smartcard (2) autorisiert ist, wobei die ersten Identifikationsdaten (41), die in der Speichereinheit (24) der Smartcard (2) gespeichert sind, lediglich die Identität des Nutzers der Smartcard (2) angeben, wobei komplementäre Informationen mit Bezug auf die ersten Identifikationsdaten (41) erforderlich sind, um die Identität des Nutzers der Smartcard (2) zu bestimmen, wobei beim Empfang von Informationen in Bezug auf die ersten Identifikationsdaten (41) durch den Autorisierungs-Client (1) auf die komplementären Informationen zugegriffen wird und die zweiten Identifikationsdaten an die Smartcard (2) gesendet werden,
- eine Batterieeinheit (23), die dafür eingerichtet ist, elektrische Leistung für alle integrierten Einheiten der Smartcard (2) zu speichern, wobei das Substrat der Smartcard (2) nur die Identität des Nutzers und/oder des Ausstellers der Smartcard (2) angibt, wobei die Identität des Nutzers und/oder des Ausstellers der Smartcard (2) erst dann sichtbar ist, nachdem die Informationen in Bezug auf die zweiten Identifikationsdaten (42) auf der Anzeigeeinheit (22) der Smartcard (2) angezeigt wurden.

8. Smartcard (2) nach Anspruch 7, wobei die Smartcard (2) eine Eingabeeinheit (25) umfasst, die dafür eingerichtet ist, den Nutzer der Smartcard (2) bevorzugt durch einen Fingerabdruck, durch eine Gesichtserkennung oder durch einen Zugangs-ID-Code zu erkennen.

9. Smartcard (2) nach einem der Ansprüche 7 oder 8, wobei die Eingabeeinheit (25) mindestens eines von Folgendem umfasst: einen Berührungsbildschirm, der dafür ausgebildet werden kann, den ID-Code zu erkennen, eine Kamera (27), die dafür ausgebildet werden kann, den Nutzer der Smartcard (2) durch die Gesichtserkennung zu erkennen, und einen Fingerabdruckscanner (26), der dafür ausgebildet werden kann, den Nutzer der Smartcard (2) anhand des Fingerabdrucks zu erkennen.

10. Smartcard (2) nach einem der Ansprüche 7 bis 9, wobei die Transceiver-Einheit (21) als eine Bluetooth-Einheit oder eine W-LAN-Einheit ausgebildet werden kann.

11. Verfahren zur Zugangsautorisierung unter Verwendung einer Smartcard (2) und eines Autorisierungs-Client (1),
- wobei die Smartcard (2) ein Substrat umfasst, das dafür eingerichtet ist, alle in der Smartcard (2) integrierten Einheiten mechanisch zu halten, wobei die Smartcard (2) des Weiteren eine Transceiver-Einheit (21) umfasst, die dafür eingerichtet ist, Signale an den Autorisierungs-Client (1) zu senden und Signale von dem Autorisierungs-Client (1) zu empfangen, wobei die Smartcard (2) des Weiteren eine Speichereinheit (24) umfasst, die dafür eingerichtet ist, erste Identifikationsdaten (41) zu speichern, wobei die Smartcard (2) des Weiteren eine Anzeigeeinheit (22) umfasst, die dafür eingerichtet ist, eine Information in Bezug auf von dem Autorisierungs-Client (1) empfangene zweite Identifikationsdaten (42) anzuzeigen, falls die Smartcard (2) oder ein Nutzer der Smartcard (2) autorisiert ist, wobei die Smartcard (2) des Weiteren eine Batterieeinheit (23) umfasst, die dafür eingerichtet ist, elektrische Leistung für alle integrierten Einheiten der Smartcard (2) zu speichern,
- wobei der Autorisierungs-Client (1) ein Transceiver-Modul (11) umfasst, das für eine Kommunikation mit der Smartcard (2) über eine Verbindung (4) eingerichtet ist, falls die Smartcard (2) sich in einem Autorisierungsbereich (3) befindet,
- wobei in einem ersten Schritt (51) des Verfahrens die Smartcard (2) und ihr Nutzer in den Autorisierungsbereich (3) eintreten und die Verbindung (4) hergestellt wird,
- wobei in einem zweiten Schritt (52) des Verfahrens die Smartcard (2) die ersten Identifikationsdaten (41) automatisch über die Verbindung (4) an den Autorisierungs-Client (1) sendet,
- wobei in einem dritten Schritt des Verfahrens der Autorisierungs-Client (1) die Autorisierung der Smartcard (2) und ihres Nutzers überprüft und einen Zugang für die Smartcard (2) und ihren Nutzer in Abhängigkeit von den ersten Identifikationsdaten (41) gewährt,
- wobei in einem vierten Schritt (54) des Verfahrens der Autorisierungs-Client (1) die zweiten Identifikationsdaten (42) unter Verwendung der Verbindung (4) an die Smartcard (2) sendet, falls der Zugang gewährt wird, wobei die Anzeigeeinheit (22) der Smartcard (2) die Informationen in Bezug auf die zweiten Identifikationsdaten (42) anzeigt, wobei die ersten Identifikationsdaten (41), die in der Speichereinheit (24) der Smartcard (2) gespeichert sind, lediglich die Identität des Nutzers der Smartcard (2) angeben, wobei komplementäre Informationen mit Bezug auf die ersten Identifikationsdaten (41) erforderlich sind, um die Identität des Nutzers der Smartcard (2) zu bestimmen, wobei beim Empfang von Informationen in Bezug auf die ersten Identifikationsdaten (41) durch den Autorisierungs-Client (1) auf die komplementären Informationen zugegriffen wird und die zweiten Identifikationsdaten an die Smartcard (2) gesendet werden,
wobei das Substrat der Smartcard (2) nur die Identität des Nutzers und/oder des Ausstellers der Smartcard (2) angibt, wobei die Identität des Nutzers und/oder des Ausstellers der Smartcard (2) erst dann sichtbar ist, nachdem die Informationen in Bezug auf die zweiten Identifikationsdaten (42) auf der Anzeigeeinheit (22) der Smartcard (2) angezeigt wurden.

12. Verfahren nach Anspruch 11, wobei die ersten Identifikationsdaten (41) als eine Nummer ausgebildet werden können, die die Smartcard (2) identifiziert, wobei die zweiten Identifikationsdaten (42) als personenbezogene Informationen des Nutzers der Smartcard (2) ausgebildet werden können, insbesondere als ein Name, eine Personalnummer und eine Fotografie.

13. Verfahren nach einem der Ansprüche 11 oder 12, wobei in dem vierten Schritt (54) Sicherheitsoptionen verlangen können, die Informationen in Bezug auf die zweiten Identifikationsdaten (42) anzuzeigen, wobei die Sicherheitsoptionen als ein Erkennen des Nutzers der Smartcard (2) durch einen Fingerabdruck, durch eine Gesichtserkennung oder durch einen ID-Code ausgebildet werden können.

14. Computerprogrammprodukt zum Steuern einer Zugangsautorisierung gemäß einem Verfahren zur Zugangsautorisierung nach einem der Ansprüche 11 bis 13 umfasst.

## Revendications

1. Système d'autorisation d'accès, dans lequel le système comprend une carte à puce (2) et un client d'autorisation (1),
- dans lequel la carte à puce (2) comprend un substrat adapté pour maintenir mécaniquement l'ensemble des unités intégrées dans la carte à puce (2), dans lequel la carte à puce (2) comprend en outre une unité d'émetteur-récepteur (21) adaptée pour transmettre des signaux au client d'autorisation (1) et pour recevoir des signaux à partir du client d'autorisation (1), une unité de mémoire (24) adaptée pour stocker de premières données d'identification (41), une unité d'affichage (22) adaptée pour afficher des informations relatives à de secondes données d'identification (42) reçues à partir du client d'autorisation (1) dans le cas où la carte à puce (2) ou un utilisateur de la carte à puce (2) est autorisé(e), et une unité de batterie (23) adaptée pour stocker de l'énergie électrique pour l'ensemble des unités intégrées dans la carte à puce (2), dans lequel les premières données d'identification (41) qui sont stockées dans l'unité de mémoire (24) de la carte à puce (2) indiquent uniquement l'identité de l'utilisateur de la carte à puce (2), dans lequel des informations complémentaires en ce qui concerne les premières données d'identification (41) sont nécessaires pour déterminer l'identité de l'utilisateur de la carte à puce (2), dans lequel lors de la réception d'informations relatives aux premières données d'identification (41), les informations complémentaires sont accédées par le client d'autorisation (1) et les secondes données d'identification envoyées à la carte à puce (2),
- dans lequel le client d'autorisation (1) comprend un module émetteur-récepteur (11) adapté pour communiquer avec la carte à puce (2) par une liaison (4) dans le cas où la carte à puce (2) est située dans une zone d'autorisation (3), dans lequel le client d'autorisation (1) comprend un premier module (12) couplé au module émetteur-récepteur (11) adapté pour accorder l'autorisation d'accès pour la carte à puce (2) et son utilisateur, et
- dans lequel le substrat de la carte à puce (2) indique uniquement l'identité de l'utilisateur et/ou de l'émetteur de la carte à puce (2), dans lequel l'identité de l'utilisateur et/ou de l'émetteur de la carte à puce (2) est visible uniquement après que les informations relatives aux secondes données d'identification (42) sont affichées sur l'unité d'affichage (22) de la carte à puce (2).

2. Système selon l'une quelconque des revendications précédentes, dans lequel un couloir (13) protégé contre les signaux radioélectriques adapté pour séparer différentes cartes à puce (2) et leurs utilisateurs les uns des autres est attribué au client d'autorisation (1).

3. Système selon l'une quelconque des revendications précédentes, dans lequel la liaison (4) entre le client d'autorisation (1) et la carte à puce (2) est une liaison sans fil, la liaison sans fil étant de préférence une liaison Bluetooth ou une liaison W-LAN.

4. Système selon l'une quelconque des revendications précédentes, dans lequel le couloir (13) est configuré de telle sorte qu'un seul utilisateur est en mesure d'utiliser le couloir (13) à la fois, dans lequel le module émetteur-récepteur (11) est situé à une extrémité du couloir (13), et dans lequel une zone de couverture radio du module émetteur-récepteur (11) est faible par rapport à une liaison Bluetooth ou W-LAN normale, de préférence environ 1 mètre.

5. Système selon l'une quelconque des revendications précédentes, dans lequel la zone d'autorisation (3) correspond à la zone de couverture radio du module émetteur-récepteur (11).

6. Système selon l'une quelconque des revendications précédentes, dans lequel la carte à puce (2) comprend une unité d'entrée (25) adaptée pour reconnaître l'utilisateur de la carte à puce (2), dans lequel l'unité d'entrée (25) comprend au moins l'un d'un tactile écran configurable pour reconnaître un code d'identification, d'une caméra (27) configurable pour reconnaître l'utilisateur de la carte à puce (2) par une reconnaissance faciale, et d'un scanner d'empreintes digitales (26) configurable pour reconnaître l'utilisateur de la carte à puce (2) par une empreinte digitale.

7. Carte à puce (2) pour une autorisation d'accès, dans laquelle la carte à puce (2) comprend :
- un substrat adapté pour maintenir mécaniquement l'ensemble des unités intégrées dans la carte à puce (2),
- une unité d'émetteur-récepteur (21) adaptée pour transmettre des signaux à un client d'autorisation (1) et pour recevoir des signaux à partir du client d'autorisation (1),
- une unité de mémoire (24) adaptée pour stocker de premières données d'identification (41),
- une unité d'affichage (22) adaptée pour afficher des informations relatives à de secondes données d'identification (42) reçues à partir du client d'autorisation (1) dans le cas où la carte à puce (2) ou un utilisateur de la carte à puce (2) est autorisé(e), dans laquelle les premières données d'identification (41) qui sont stockées dans l'unité de mémoire (24) de la carte à puce (2) indiquent uniquement l'identité de l'utilisateur de la carte à puce (2), dans laquelle des informations complémentaires en ce qui concerne les premières données d'identification (41) sont nécessaires pour déterminer l'identité de l'utilisateur de la carte à puce (2), dans laquelle lors de la réception des informations relatives aux premières données d'identification (41), les informations complémentaires sont accédées par le client d'autorisation (1) et les secondes données d'identification envoyées à la carte à puce (2),
- une unité de batterie (23) adaptée pour stocker de l'énergie électrique pour l'ensemble des unités intégrées de la carte à puce (2),
dans laquelle le substrat de la carte à puce (2) indique uniquement l'identité de l'utilisateur et/ou de l'émetteur de la carte à puce (2), dans laquelle l'identité de l'utilisateur et/ou de l'émetteur de la carte à puce (2) est visible uniquement après que les informations relatives aux secondes données d'identification (42) sont affichées sur l'unité d'affichage (22) de la carte à puce (2).

8. Carte à puce (2) selon la revendication 7, dans laquelle la carte à puce (2) comprend une unité d'entrée (25) adaptée pour reconnaître l'utilisateur de la carte à puce (2), de préférence par une empreinte digitale, par une reconnaissance faciale ou par un code d'identification d'accès.

9. Carte à puce (2) selon l'une des revendications 7 ou 8, dans laquelle l'unité d'entrée (25) comprend au moins l'un d'un écran tactile configurable pour reconnaître le code d'identification, d'une caméra (27) configurable pour reconnaître l'utilisateur de la carte à puce (2) par la reconnaissance faciale, et d'un scanner d'empreintes digitales (26) configurable pour reconnaître l'utilisateur de la carte à puce (2) par l'empreinte digitale.

10. Carte à puce (2) selon l'une des revendications 7 à 9, dans laquelle l'unité d'émetteur-récepteur (21) est configurable en tant qu'unité Bluetooth ou unité W-LAN.

11. Procédé d'autorisation d'accès utilisant une carte à puce (2) et un client d'autorisation (1),
- dans lequel la carte à puce (2) comprend un substrat adapté pour maintenir mécaniquement l'ensemble des unités intégrées dans la carte à puce (2), dans lequel la carte à puce (2) comprend en outre une unité d'émetteur-récepteur (21) adaptée pour transmettre des signaux au client d'autorisation (1) et pour recevoir des signaux à partir du client d'autorisation (1), dans lequel la carte à puce (2) comprend en outre une unité de mémoire (24) adaptée pour stocker de premières données d'identification (41), dans lequel la carte à puce (2) comprend en outre une unité d'affichage (22) adaptée pour afficher des informations relatives à de secondes données d'identification (42) reçues à partir du client d'autorisation (1) dans le cas où la carte à puce (2) ou un utilisateur de la carte à puce (2) est autorisé(e), dans lequel la carte à puce (2) comprend en outre une unité de batterie (23) adaptée pour stocker de l'énergie électrique pour l'ensemble des unités intégrées de la carte à puce (2),
- dans lequel le client d'autorisation (1) comprend un module d'émetteur-récepteur (11) adapté pour communiquer avec la carte à puce (2) par une liaison (4) dans le cas où la carte à puce (2) est située dans une zone d'autorisation (3),
- dans lequel, dans une première étape (51) du procédé, la carte à puce (2) et son utilisateur pénètrent dans la zone d'autorisation (3) et la liaison (4) est établie,
- dans lequel, dans une deuxième étape (52) du procédé, la carte à puce (2) envoie les premières données d'identification (41) au client d'autorisation (1) par l'intermédiaire de la liaison (4) de façon automatique,
- dans lequel, dans une troisième étape du procédé, le client d'autorisation (1) vérifie l'autorisation de la carte à puce (2) et de son utilisateur et accorde l'accès à la carte à puce (2) et à son utilisateur en fonction des premières données d'identification (41),
- dans lequel, dans une quatrième étape (54) du procédé, le client d'autorisation (1) envoie les secondes données d'identification (42) à la carte à puce (2) dans le cas où l'accès est accordé, en utilisant la liaison (4), dans lequel l'unité d'affichage (22) de la carte à puce (2) affiche les informations relatives aux secondes données d'identification (42) dans lequel les premières données d'identification (41) qui sont stockées dans l'unité de mémoire (24) de la carte à puce (2) indiquent uniquement l'identité de l'utilisateur de la carte à puce (2), dans lequel des informations complémentaires en ce qui concerne les premières données d'identification (41) sont nécessaires pour déterminer l'identité de l'utilisateur de la carte à puce (2), dans lequel lors de la réception des informations relatives aux premières données d'identification (41), les informations complémentaires sont accédées par le client d'autorisation (1) et les secondes données d'identification envoyées à la carte à puce (2),
dans lequel le substrat de la carte à puce (2) indique uniquement l'identité de l'utilisateur et/ou de l'émetteur de la carte à puce (2), dans lequel l'identité de l'utilisateur et/ou de l'émetteur de la carte à puce (2) est visible uniquement après que les informations relatives aux secondes données d'identification (42) sont affichées sur l'unité d'affichage (22) de la carte à puce (2).

12. Procédé selon la revendication 11, dans lequel les premières données d'identification (41) sont configurables en tant que numéro identifiant la carte à puce (2), dans lequel les secondes données d'identification (42) sont configurables en tant qu'informations relatives à un individu de l'utilisateur de la carte à puce (2) notamment un nom, un numéro personnel et une photographie.

13. Procédé selon l'une des revendications 11 ou 12, dans lequel, dans la quatrième étape (54), des options de sécurité peuvent nécessiter d'afficher les informations relatives aux secondes données d'identification (42), dans lequel les options de sécurité sont configurables en tant que reconnaissance de l'utilisateur la carte à puce (2) par une empreinte digitale, par une reconnaissance faciale ou par un code d'identification.

14. Produit de programme informatique comportant pour commander une autorisation d'accès selon un procédé d'autorisation d'accès selon l'une des revendications 11 à 13.
